# EUROPÄISCHE PATENTANMELDUNG

(11) **EP 0 872 291 A1**
(43) Veröffentlichungstag der Anmeldung: **21.10.1998**
(21) Anmeldenummer: 97810232.5
(22) Anmeldetag: 16.04.1997
(51) Int. Cl.: B21C 23/08, B60J 5/04

(54) **Verfahren zum Umformen von Profilen**

(71) Anmelder: Alusuisse Technology & Management AG, 8212 Neuhausen am Rheinfall (CH)
(72) Erfinder: Frank, Simon, 78250 Tengen (DE)

(57) **Zusammenfassung**

Bei einem Verfahren zum starken Kaltumformen von stranggepressten Profilen aus einer kaltaushärtenden Aluminiumlegierung wird die Umformung nach dem Austritt des Profils aus der Strangpresse innerhalb einer vom Beginn der Kaltaushärtung gemessenen Zeit (t), bei der die als Folge der Kaltaushärtung abnehmende Duktilität eine möglichst geringe Abweichung von ihrem Maximalwert aufweist, durchgeführt. Mit dem Verfahren können an Profilen aus kaltaushärtenden Aluminiumlegierungen höhere Umformgrade erzielt werden.

## Beschreibung

Die Erfindung betrifft ein Verfahrem zum starken Kaltumformen von stranggepressten Profilen aus einer kaltaushärtenden Aluminiumlegierung, wobei der Umformvorgang vor einer allfälligen Warmaushärtung erfolgt. Im Rahmen der Erfindung liegen auch eine Anwendung des Verfahrens sowie eine Verwendung eines mit dem Verfahren hergestellten Profils.

Eine starke Kaltumformung von Profilen aus kaltaushärtenden Aluminiumlegierungen kann wegen ungenügender Duktilität des Werkstoffs zu einer Ueberbeanspruchung des Materials führen, was sich u.a. durch Materialrisse im Umformbereich, die bis zum Bruch führen können, bemerkbar macht.

Der Erfindung liegt daher die Aufgabe zugrunde, ein Verfahren der eingangs genannten Art zu schaffen, mit dem auf einfache und kostengünstige Weise die Umformbarkeit stranggepresster Profile aus kaltaushärtenden Aluminiumlegierungen gegenüber dem heute bekannten Stand der Technik erhöht werden kann.

Zur erfindungsgemässen Lösung der Aufgabe führt, dass die Umformung nach dem Austritt des Profils aus der Strangpresse innerhalb einer vom Beginn der Kaltaushärtung gemessenen Zeit, bei der die als Folge der Kaltaushärtung abnehmende Duktilität eine möglichst geringe Abweichung von ihrem Maximalwert aufweist, durchgeführt wird.

Das erfindungsgemässe Verfahren beruht auf der Erkenntnis, dass der maximal zulässige Umformgrad bei einer Kaltumformung umso höher liegt, je grösser die Duktilität der Legierung ist. Da der im Zeitpunkt der beginnenden Kaltaushärtung nach dem Abschrecken des aus der Strangpresse austretenden Profils maximale Wert der Duktilität mit zunehmender Lagerzeit des Profils bei Raumtemperatur kontinuierlich abnimmt, ist die Umformbarkeit des Profils unmittelbar nach dessen Austritt aus der Strangpresse am höchsten. Es sollte daher insbesondere bei sehr starken Umformungen darauf geachtet werden, dass diese innerhalb weniger Minuten nach dem Profilaustritt aus der Strangpresse durchgeführt werden.

Da die Kaltaushärtung bei unterschiedlichen Legierungstypen unterschiedlich verläuft, kann keine allgemein gültige Angabe für die maximal zulässige Zeitspanne, innerhalb der ein bestimmter Kaltumformungsgrad ohne Materialschädigung noch zulässig ist, angegeben werden. Diese Werte können jedoch experimentell auf einfache Weise anhand der für die jeweils eingesetzte Legierung geltenden Aushärtungskurve ermittelt werden.

Für die meisten Legierungen dürfte jedoch als Maximalwert eine Zeit von 2h als noch zulässig gelten, wobei die Umformung bevorzugt innerhalb von 1h, insbesondere innerhalb von 0,5h nach dem Austritt des Profils aus der Stangpresse durchgeführt wird.

Das erfindungsgemässe Verfahren kann grundsätzlich zum Kaltumformen aller kaltaushärtender Aluminiumlegierungen wie beispielsweise AlMgSi, AlZnMg, AlCuMg oder AlZnMgCu eingesetzt werden. Besonders vorteilhaft wirkt sich das Verfahren bei der Umformung von Aluminiumlegierungen vom Typ AlMgSi aus, da sich der Duktilitätsgewinn zu der ohnehin guten Duktilität dieser Legierungsgruppe addiert.

Nach durchgeführter Kaltumformung können die Profile auf übliche Weise, z.B. in Form einer Warmaushärtung, weiterbehandelt werden.

Unter dem Begriff Kaltumformen wird hier jede Art der durch Krafteinwirkung auf das Profil erzeugte plastische Verformung wie Biegen, Strecken oder Quetschen verstanden.

Das Verfahren ist besonders gut geeignet zur Ausbildung von Falzen in einer Profilwand durch Quetschen des Profils.

Ein mit dem erfindungsgemässen Verfahren hergestelltes Profil, bei dem in zumindest einer Profilwand durch die Umformung Falzen erzeugt wurden, wird bevorzugt als Seitenaufprallschutz in Fahrzeugtüren eingesetzt.

Die Erfindung wird nachfolgend anhand der Zeichnung näher erläutert; diese zeigt schematisch in
- Fig. 1: den typischen zeitlichen Verlauf der Dehngrenze bei der Kaltaushärtung einer Aluminiumlegierung;
- Fig. 2: die Draufsicht auf den Aussengurt eines Aufprallträgers;
- Fig. 3: die Seitenansicht zu Fig. 2;
- Fig. 4: den vergrösserten Querschnitt durch den Aufprallträger von Fig. 3 nach deren Linie I-I.

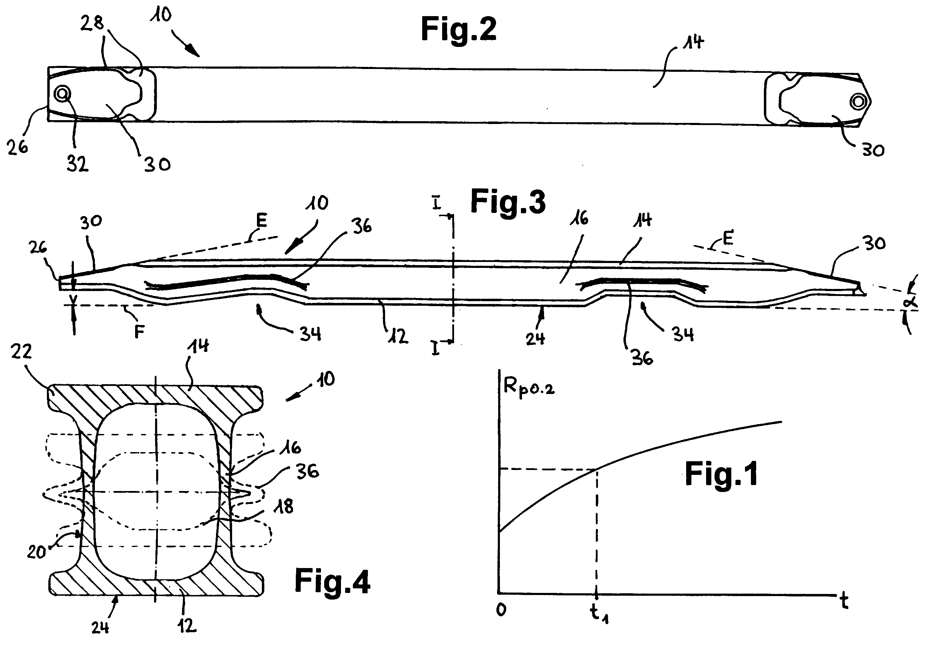

Wie in Fig. 1 gezeigt, weist die Dehngrenze Rₚ 0,2 einer Aluminumlegierung im Zeitpunkt t = 0 der beginnenden Kaltaushärtung ihren Minimalwert auf. Mit zunehmender Zeit t nimmt dieser Wert kontinuierlich zu. Im angegebenen Beispiel beträgt die Zunahme der Dehngrenze etwa 100%. Die Dehngrenze kann als qualitatives Mass für die Duktilität herangezogen werden. Mit steigender Dehngrenze nimmt die Duktilität einer Legierung im allgemeinen ab. Eine vergleichbare Relation besteht zwischen Festigkeit und Duktilität. Auch die mit steigender Festigkeit abnehmende Bruchdehnung kann als Mass für die Duktilität dienen, wobei mit sinkender Bruchdehnung die Duktilität im allgemeinen ebenfalls abnimmt.

Ein in Fig. 2 bis 4 dargestellter Aufprallträger 10 für den Einbau in eine aus Gründen der besseren Uebersicht nicht wiedergegebenen Fahrzeugtür weist zwei in Abstand zueinander parallele Wände auf, die in Einbaulage des Aufprallträgers 10 einen zum Fahrzeuginnern gerichteten Innengurt 12 sowie einen der Türaussenfläche benachbarten Aussengurt 14 bilden. Letzterer ist mit dem Innengurt 12 durch zwei Querwände 16 zu einem Hohlprofil mit Profilkammer 18 ergänzt.

Sowohl Innengurt 12 als auch Aussengurt 14 -- nachfolgend Gurtwände genannt -- kragen beidseits über die Aussenflächen 20 der Querwände 16 hinaus und bilden so Wulstabschnitte 22.

Der Aufprallträger 10 ist an beiden Enden in einer Linie E abgeschrägt, welche mit der Trägerinnenseite 24 bzw. deren Ebene F einen spitzen Winkel α einschliesst. Durch diesen schräggelegten Schnitt entsteht eine Stirnkante 26, die aus der Ebene F der ursprünglichen Kontur der Trägerunterseite 24 in einem Versetzungsmass v aufwärts versetzt ist.

In der Draufsicht nach Fig. 2 ist die durch den beschriebenen Schnittvorgang entstehende Schrägfläche 28 zu erkennen, die sich aus Schnittflächen der Querwände 16 und des Aussengurtes 14 zusammensetzt sowie U-förmiger Gestalt ist.

Die durch die beschriebene Schnittebene E und die dazu erläuterte Versetzung der Trägerinnenseite 24 entstandenen Profilenden 30 werden in Sicken eines Türrahmens eingelegt und mittels Bohrungen 32 durchsetzender Schrauben befestigt.

Damit die für den Einbau von Fensterhebern und dgl. im Türkasten benötigte Einbautiefe durch den Aufprallträger 10 nicht unnötig geschmälert wird, ist der Aufprallträger 10 im Bereich der erwähnten Einbaustellen 34 gequetscht, d.h. die Distanz zwischen Innengurt 12 und Aussengurt 14 ist im Bereich der Einbaustellen 34 geringer als in der Mitte des Aufprallträgers. Durch diese Quetschung werden die Querwände 16 im Bereich der Einbaustellen 34 unter Ausbildung eines nach aussen gerichteten Falzes 36 stark verformt.

Der in den Fig. 2 bis 4 dargestellte Aufprallträger 10 wird beispielsweise aus einer Legierung vom Typ AlMgSi1 gefertigt. Die im Rahmen der Konfektionierung des Trägers durchgeführte Quetschung erfolgt beispielsweise 20 min. nach dem Austritt des Profils aus der Strangpresse. Die in dieser Zeitspanne eingetretene Verminderung der Duktilität ist noch so gering, dass der durch die Quetschung entstandene Falz noch keine Materialrisse oder andere Anzeichen eines beginnenden Bruches zeigt.

## Patentansprüche

1. Verfahren zum starken Kaltumformen von stranggepressten Profilen aus einer kaltaushärtenden Aluminiumlegierung, wobei der Umformvorgang vor einer allfälligen Warmaushärtung erfolgt,
dadurch gekennzeichnet, dass
die Umformung nach dem Austritt des Profils aus der Strangpresse innerhalb einer vom Beginn der Kaltaushärtung gemessenen Zeit (t), bei der die als Folge der Kaltaushärtung abnehmende Duktilität eine möglichst geringe Abweichung von ihrem Maximalwert aufweist, durchgeführt wird.

2. Verfahren nach Anspruch 1, dadurch gekennzeichnet, dass das Profil innerhalb einer Zeit (t) von max. 2h, vorzugsweise max. 1h, insbesondere max. 0,5h nach dessen Austritt aus der Strangpresse umgeformt wird.

3. Verfahren nach Anspruch 1 oder 2, dadurch gekennzeichnet, dass die Aluminiumlegierung vom Typ AlMgSi ist.

4. Anwendung des Verfahrens nach einem der Ansprüche 1 bis 3 zur Ausbildung von Falzen (36) in einer Profilwand (16) durch Quetschen des Profils.

5. Verwendung eines mit dem Verfahren nach einem der Ansprüche 1 bis 3 hergestellten Profils mit durch die Umformung erzeugten Falzen (36) in zumindest einer Profilwand (16) als Seitenaufprallschutz (10) in einer Fahrzeugtür.
